# EUROPÄISCHE PATENTSCHRIFT

(11) **EP 1 269 679 B1**
(45) Veröffentlichungstag und Bekanntmachung des Hinweises auf die Patenterteilung: **04.05.2005**
(21) Anmeldenummer: 01919321.8
(22) Anmeldetag: 21.02.2001
(51) Int. Cl.: H04L 9/08, G02F 1/21, G02F 1/39

(54) **VERFAHREN ZUR VERÄNDERUNG DER POLARISATION WENIGSTENS EINES DER AUS EINER PHOTONENPAARQUELLE IN VERSCHIEDENE TEILSTRAHLENGÄNGE ABGESTRAHLTEN PHOTONEN UND VERFAHREN ZUR ERZEUGUNG VON WAHLWEISE EINZELPHOTONEN ODER PHOTONENPAAREN IN EINEM OPTISCHEN KANAL**
METHOD FOR CHANGING THE POLARISATION OF AT LEAST ONE PHOTON OF THE PHOTONS WHICH ARE RADIATED FROM A PHOTON PAIR SOURCE TO FORM VARIOUS PARTIAL BEAM PATHS AND A METHOD FOR PRODUCING INDIVIDUAL PHOTONS OR PHOTON PAIRS IN AN OPTICAL CHANNEL
PROCEDE PERMETTANT DE MODIFIER LA POLARISATION D'AU MOINS UN DES PHOTONS EMIS PAR UNE SOURCE DE PAIRES DE PHOTONS DANS DIFFERENTS TRAJETS DE FAISCEAUX PARTIELS ET PROCEDE PERMETTANT DE PRODUIRE DES PHOTONS INDIVIDUELS OU DES PAIRES DE PHOTONS DANS UN CANAL OPTIQUE

(30) Priorität: 17.03.2000 DE 10013184
(43) Veröffentlichungstag der Anmeldung: 02.01.2003
(73) Patentinhaber: Deutsche Telekom AG, 53113 Bonn (DE)
(72) Erfinder: DULTZ, Wolfgang, 65936 Frankfurt am Main (DE); SCHMITZER, Heidrun, 09123 Chemnitz (DE); SCHMID, Kay, Michael, 60329 Frankfurt/Main (DE); BECKER, Helmar, A., 63454 Hanau (DE)
(86) Internationale Anmeldenummer: PCT/EP2001/001950
(87) Internationale Veröffentlichungsnummer: WO 2001/069840

(56) Entgegenhaltungen:
- WO-A-99/66641
- DE-A- 19 823 849

## Beschreibung

### Technisches Gebiet:

Die Erfindung betrifft ein Verfahren zur Veränderung der Polarisation wenigstens eines der aus einer Photonenpaarquelle in verschiedene Teilstrahlengänge abgestrahlten Photonen. Die Erfindung betrifft weiterhin ein Verfahren zur Erzeugung von wahlweise Einzelphotonen oder Photonenpaaren in einem optischen Kanal.

### Stand der Technik:

Der sogenannte Quantenrechner ist für die Entwicklung von Rechenmaschinen von großem Interesse. Beim Quantenrechner werden logische Operationen durch Quantenzustände und deren gezielte Beeinflussung realisiert. Quantenzustände können beschrieben werden durch die Überlagerung einer großen Anzahl von normierten, orthogonalen Basiszuständen, deren Gewichtung Wahrscheinlichkeitsmaße sind, die durch Meßprozesse bestimmt werden können. Dem binären Bit, das beim herkömmlichen elektronischen Rechner die Grundeinheit für alle Rechenoperationen ist, entspricht beim Quantenrechner das "Quantenbit" (qubit) als Grundeinheit. Das Quantenbit läßt sich dabei darstellen als linearer, gewichteter Überlagerungszustand aus zwei Basisfunktionen, nämlich der Basisfunktionen "0" und "1". Die Basisfunktionen entsprechen den klassischen Werten 0 bzw. 1 des Bits. Die komplexen Koeffizienten entsprechen den Gewichten, mit denen die Basisfunktionen am Überlagerungszustand beteiligt sind. Die Grundlagen des Quantenrechners sind beispielsweise in V. Vedral et al., Basics of Quantum Computation, Progr. In Quantum Electronics 22, 1 (1998) beschrieben.

Ein Beispiel für einen solchen Quantenzustand, der sich als Überlagerung aus zwei orthogonalen Basisfunktionen beschreiben läßt, ist der Polarisationszustand des Lichts. Quantenbits können daher als Polarisationszustände von einzelnen Photonen und logische Operationen durch Manipulation der Photonen oder Photonenpaare realisiert werden. Mathematisch-topologisch äquivalent werden Quantenbits auf der Blochkugel, Polarisationszustände auf der Poincarekugel als Oberflächenpunkte dargestellt.

Für die Verwendung von Licht als Basis eines Quantenrechners von Vorteil ist die gezielte Beeinflußbarkeit des Polarisationszustands eines einzelnen Photons, das von einer Photonenpaarquelle abgegeben wurde.

Eine weitere in diesem Zusammenhang wichtige Eigenschaft des Lichts besteht darin, daß Polarisationszustände innerhalb eines aus einem einzigen Zerfall stammenden Photonenpaars, korreliert sind. Das Photonenpaar befindet sich quantenmechanisch in einem sogenannten "verschränkten Zustand", der als Ausgangszustand für den Quantenrechner dienen kann.

Eine Photonenpaarquelle ist beispielsweise durch einen optisch nichtlinearen Kristall in Verbindung mit einer intensiven optischen Pumplichtquelle, meist einer Laserlichtquelle, realisiert. Unter geeigneten geometrischen Bedingungen zerfällt ein einzelnes Photon der Pumplichtquelle mit einer gewissen Wahrscheinlichkeit unter Energie- und Impulserhaltung in zwei Energiequanten bzw. Photonen. Dieses Phänomen wird als parametrische Fluoreszenz bezeichnet und ist beispielsweise in H. Paul, nichtlineare Optik, Band 2, Seite 94 ff, Berlin 1973 beschrieben. Das Fluoreszenzlicht wird mit zwei, je nach Anregungsgeometrie verschiedenen, Hauptfrequenzen bzw. Wellenlängen in definierte Raumrichtungen relativ zur Ausbreitungsrichtung des Pumpstrahls emittiert. Die beiden Fluoreszenzphotonen werden praktisch gleichzeitig, d.h. innerhalb einer Zeit von etwa 10 Femtosekunden, und je nach Art des nichtlinearen Kristalls und der Anregungsgeometrie in die gleiche oder in verschiedene Raumrichtungen emittiert. Die Polarisation der Fluoreszenzphotonen ist dabei festgelegt. Die physikalischen Eigenschaften der beiden Photonen der parametrischen Fluoreszenz sind durch eine Reihe von Nebenbedingungen miteinander verknüpft. Bei den verschränkten Photonen handelt es sich quantenmechanisch um einen einzigen Zustand, in dem sich zwei Photonen unseparierbar aufhalten, wobei durch Messungen an einem der Photonen genaue Aussagen über die physikalischen Eigenschaften des jeweils anderen Photons getroffen werden können.

Mit der Anmeldung DE 198 23 849.5 wurde ein Verfahren und eine Vorrichtung zur Erzeugung von wahlweise einzelnen Photonen oder Photonenpaaren in einem optischen Kanal beschrieben, mit dem ein Photonenpaar, das sich in einem quantenmechanisch verschränkten Zustand befindet, gezielt räumlich getrennt werden kann oder sich als Paar kollinear ausbreitet. Gemäß der DE 198 23 849.5 werden von einer Photonenpaarquelle Photonenpaare in einem quantenmechanisch verschränkten Zustand erzeugt und jeweils ein Photon des Paars in jeweils einen Teilstrahlengang der Vorrichtung eingekoppelt, wobei die beiden Teilstrahlengänge auf einem Strahlteiler zusammengeführt und in zwei gemeinsame Ausgangskanäle überführt werden. Im ersten Teilstrahlengang ist ein Interferometer angeordnet, dessen Interferometerarme die optischen Weglängen δl_{F} und δl_{S} aufweisen. Im zweiten Teilstrahlengang ist eine optische Verzögerungsstrecke der optischen Länge δl angeordnet. Mit Mitteln zur Veränderung der optischen Weglängen δl_{F}, δl_{S} und/oder δl, sind diese Weglängen so abstimmbar, daß in den Ausgangskanälen des Strahlteilers durch Interferenz sich kollinear oder getrennt ausbreitende Photonenpaare erzeugt werden. Die Abstimmung erfolgt beispielsweise über die Messung der Koinzidenzen zwischen den Ausgangskanälen.

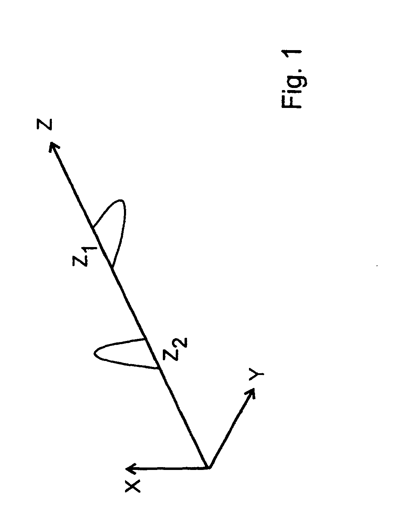

Die Trennung der Paare mit der Anordnung aus der DE 198 23 849.5 beruht darauf, daß der Quantenzustand des einen Photons in zwei vorzugsweise getrennte Wahrscheinlichkeitsverteilungen im Zustandsraum zerlegt wird, die von unterschiedlicher, nämlich orthogonaler Polarisation und örtlich voneinander getrennt sind. Diese Wahrscheinlichkeitsverteilung wird erreicht, indem das Photon ein polarisierendes Interferometer durchläuft, das beispielsweise ein doppelbrechender Kristall oder ein mit unter 45° zur Polarisation des Photons ausgerichteten polarisierenden Strahlteilern aufgebautes Interferometer ist. Durch die unterschiedlichen optischen Weglängen in den Interferometerarmen wird ein Photon erzeugt, dessen Aufenthaltswahrscheinlichkeit im Ortsraum zwei Maxima aufweist, die sich mit Lichtgeschwindigkeit entlang desselben Lichtwegs ausbreiten und Zustände mit orthogonaler Polarisation umfassen. In Figur 1 ist schematisch ein solches Photon dargestellt, das sich in z-Richtung ausbreitet. Das Wellenpaket ist bei Z1 horizontal linear polarisiert (y-Richtung) und bei Z2 vertikal linear polarisiert.

Der Nachteil dieses Quantenzustands besteht darin, daß die Aufenthaltswahrscheinlichkeiten bei Z1 und Z2 unterschiedlich polarisiert sind. Da stets nur ununterscheidbare Photonen miteinander interferieren, sollten beide Aufenthaltswahrscheinlichkeitsgebiete um Z1 und Z2 die gleiche Polarisation haben, um optimal weiterverarbeitet und mit dem Photon im zweiten Teilstrahlengang zur Interferenz gebracht zu werden. Die Polarisationen der beiden Gebiete Z1, Z2 kann dadurch angeglichen werden, indem das Photon im ersten Teilstrahlengang einen linearen Polarisator durchläuft, der unter 45° zur x-und zur y-Achse steht. Der Nachteil daran ist, daß die Hälfte der korrelierten Photonenpaare auf diese Weise verloren geht.

### Technische Aufgabe:

Der Erfindung liegt daher die Aufgabe zugrunde, ein Verfahren zur Verfügung zu stellen, mit welchem die Polarisation eines Photons eines Photonenpaars, insbesondere die Polarisationsverteilung eines solchen Photons, gezielt verändert werden kann. Der Erfindung liegt weiter die Aufgabe zugrunde, die Effizienz des bereits in der DE 198 23 849.5 vorgeschlagenen Verfahrens zur Erzeugung von wahlweise Einzelphotonen oder Photonenpaaren in einem optischen Kanal zu verbessern.

### Offenbarung der Erfindung und ihrer Vorteile:

Die Lösung der Aufgabe besteht in einem Verfahren zur Veränderung der Polarisation wenigstens eines Photons von aus einer Photonenpaarquelle in verschiedene Teilstrahlengänge abgestrahlten Photonen mittels eines elektrooptischen Modulators (EOM), welcher jeweils in dem Teilstrahlengang, den das zu beeinflussende Photon durchläuft, angeordnet ist und der im aktivierten Zustand die Polarisation eines Photons zu verändern imstande ist, dadurch gekennzeichnet,
daß der Modulator (EOM) zeitlich derart aktiviert wird, daß sich die Aufenthaltswahrscheinlichkeit des Photons im Bereich des elektrooptischen Modulators (EOM) im aktivierten Zustand in einem Maximum befindet, und der Modulator (EOM) nach Durchgang des Maximums deaktiviert wird, wobei
- die Photonenpaarquelle ein mit einem gepulsten Laser gepumpter optisch nichtlinearer Kristall ist und der Zeitpunkt, zu dem der Modulator (EOM) aktiviert wird (Aktivierungszeitpunkt), aus der Puls-Wiederholungsrate und der optischen Weglänge vom Kristall bis zum elektrooptischen Modulator (EOM) bestimmt wird,
- und/oder der Aktivierungszeitpunkt zur Beeinflussung des einen Photons aus dem Registrierzeitpunkt des anderen Photons bestimmt wird, wobei das andere Photon registriert wird, ohne es zu vernichten.

Die Aufgabe wird ferner gelöst durch ein Verfahren zur Erzeugung von wahlweise Einzelphotonen oder Photonenpaaren in einem optischen Kanal unter Verwendung einer Photonenpaarquelle, wobei die Photonen eines Photonenpaars in jeweils einen Teilstrahlengang der Vorrichtung eingekoppelt und die beiden Teilstrahlengänge auf einem Strahlteiler zusammengeführt und in zwei gemeinsame Ausgangskanäle überführt werden, eines Interferometers, das im ersten Teilstrahlengang angeordnet ist, sowie von Mitteln zur Veränderung der optischen Weglängen der Interferometerarme und/oder des zweiten Teilstrahlengangs, wobei im ersten Teilstrahlengang nach dem Interferometer ein elektrooptischer Modulator (EOM) angeordnet wird, der im aktivierten Zustand die Polarisation eines Photons zu verändern imstande ist, dadurch gekennzeichnet,
daß der Modulator (EOM) zeitlich derart aktiviert wird, daß sich die Aufenthaltswahrscheinlichkeit des Photons im Bereich des elektrooptischen Modulators (EOM) im aktivierten Zustand in einem Maximum befindet, und der Modulator (EOM) nach Durchgang des Maximums deaktiviert wird, wobei
- die Photonenpaarquelle ein mit einem gepulsten Laser gepumpter optisch nichtlinearer Kristall ist und der Zeitpunkt, zu dem der Modulator (EOM) aktiviert wird (Aktivierungszeitpunkt), aus der Puls-Wiederholungsrate und der optischen Weglänge vom Kristall bis zum elektrooptischen Modulator (EOM) bestimmt wird,
- und/oder der Aktivierungszeitpunkt zur Beeinflussung des einen Photons aus dem Registrierzeitpunkt des anderen Photons bestimmt wird, wobei das andere Photon registriert wird, ohne es zu vernichten,
- und/oder der Aktivierungszeitpunkt des Modulators (EOM) aus der optischen Weglänge eines oder beider Interferometerarme bestimmt wird.

Dabei ist das Interferometer vorzugsweise ein polarisierendes Interferometer, welches unter 45° zur Polarisationsrichtung des in den ersten Teilstrahlengang abgestrahlten Photons angeordnet ist.

Erfindungsgemäß wird der Modulator zeitlich also derart aktiviert, daß er gerade den Teil der Wellenfunktion des Photons, dessen Polarisation verändert werden soll, zu beeinflussen imstande ist. Im Falle eines Photons mit annähernd gaußförmiger Wahrscheinlichkeitsverteilung im Ortsraum und konstanter Polarisation kann der Modulators schon vor Ankunft des Photons am Modulator aktiviert werden, d.h. vor Erreichen des Maximums der Aufenthaltswahrscheinlichkeit am Modulator. Der Modulator wird deaktiviert, nachdem die lokale Aufenthaltswahrscheinlichkeit auf Null zurückgegangen, d.h. das Photon den Modulator verlassen hat. Soll auch das nächste Photon beeinflußt werden, kann der Modulator auch aktiviert bleiben. Im Falle eines Photons mit aufgespaltener Wahrscheinlichkeitsverteilung, z.B. wie in Figur 1, wird der Modulator so aktiviert, daß er nur den Bereich um eines der Maxima der Wahrscheinlichkeitsverteilung beeinflußt.

Soll das erste Maximum, z.B. in Figur 1 das um Z1, manipuliert werden, wird daher rechtzeitig vor Eintreffen dieses Teilwellenpakets der Modulator aktiviert und wieder deaktiviert, bevor das weitere Teilwellenpaket, in Figur 1 mit dem Maximum um Z2, eintrifft. In diesem Fall ist die Aktivierungsdauer bzw. der Deaktivierungszeitpunkt an den zeitlichen Abstand der beiden Teilwellenpakete anzupassen und genau einzuhalten, um die Polarisation des zweiten Teilwellenpakets nicht zu verändern. Je nach den optischen Eigenschaften des elektooptischen Modulators, insbesondere Aktivierungs- und Abklingdauer, kann es sinnvoll sein, den zweiten Teil des Wellenpakets zu beeinflussen. In diesem Fall muß der Aktivierungszeitpunkt genau eingehalten werden, wobei der Deaktivierungszeitpunkt weniger kritisch ist. Daher kann dann auch ein Modulator mit einer größeren Abklingdauer gewählt werden, wobei der Modulator bei Eintreffen des nächsten Photons jedoch wieder vollständig deaktiviert und aktivierbar sein muß.

Bei Verwendung einer im Pulsbetrieb arbeitenden Photonenpaarquelle, die vorzugsweise ein mit einem gepulsten Laser gepumpter optisch nichtlinearer Kristall ist, wird der Zeitpunkt, zu dem der Modulator aktiviert wird (Aktivierungszeitpunkt), vorzugsweise aus der Puls-Wiederholungsrate und der optischen Weglänge vom Kristall bis zum elektrooptischen Modulator bestimmt. Durch eine Vergleichsmessung lassen sich aus der Repetitionsrate und dem Abstand des Detektors von der Photonenpaarquelle die Zeitpunkte ermitteln, zu denen Photonenpaare erzeugt werden. Aus der optischen Weglänge von der Photonenpaarquelle zum Modulator kann bestimmt werden, zu welchem Zeitpunkt innerhalb eines jeden Zyklus das Photon am Modulator ankommt und der Modulator zu aktivieren ist.

Im Falle der Erzeugung von wahlweise Einzelphotonen oder Photonenpaaren wird der Aktivierungs- und/oder Deaktivierungszeitpunkt des Modulators vorzugsweise aus der optischen Weglänge eines oder beider Interferometerarme bestimmt. In Kenntnis der übrigen Weglängen von der Photonenpaarquelle zum Modulator ergibt sich der Aktivierungszeitpunkt aus der Laufzeit des Photons durch den kürzeren Interferometerarm, wenn das frühere Teilwellenpaket beeinflußt werden soll. Dabei wird so aktiviert, daß der Modulator beim Eintreffen des früheren Teilwellenpakets bereits aktiv ist und beim Eintreffen des späteren Teilwellenpakets bereits deaktiviert ist. Soll das spätere Teilwellenpaket beeinflußt werden, so wird der Modulator so angeschaltet, daß er erst bei Ankunft des späteren Teilwellenpakets aktiviert ist. Die Genauigkeit, mit der in diesem Fall aktiviert werden muß, ergibt sich aus der Laufzeitdifferenz der beiden Interferometerarme.

Alternativ oder ergänzend dazu wird der Aktivierungszeitpunkt zur Beeinflussung des einen Photons aus dem Registrierzeitpunkt des anderen Photons und den jeweiligen optischen Weglängen bestimmt. Da beide Photonen weiter verwendet werden sollen, wird das andere Photon registriert, ohne es zu vernichten. Das Photon kann im Prinzip zerstörungsfrei erfaßt werden, indem es ein nichtlineares Medium, beispielsweise einzelne hochangeregte Atome (Rydberg-Atome), durchläuft. Beim Durchgang des Photons ändert das Medium seinen Brechungsindex. Diese Brechnungsindexänderung wird von einem Testlaserstrahl interferometrisch registriert (sogenannte "Quantennondemolation-Messung.

Um sicherzugehen, daß jeweils nur die Photonen eines bestimmten Photonenpaars beeinflußt werden, wird vorgeschlagen, daß die Dauer, für die der Modulator aktiviert wird, wenigstens um die Hälfte geringer als die Periodendauer der gepulsten Photonenpaarquelle ist.

Für die meisten Anwendungen ist ein Modulator notwendig, der die Polarisation des Photons bzw. des Teilwellenpakets um 90° zu drehen imstande ist. Beispielsweise ist der elektrooptische Modulator ein λ/2-Verzögerungselement, welches zur Veränderung der Polarisation des Photons schnell gedreht oder ein- bzw. abgeschaltet wird. Als Modulator wird beispielsweise eine Pockels- oder Kerrzelle auf der Basis nichtlinearer optischer Kristalle wie KDP, LiNbO₃ oder auf der Basis von Halbleitermaterialien wie GaAs verwendet. Diese Modulatoren können derzeit mit Zertkonstanten im Nanosekundenbereich geschaltet werden, wobei die Entwicklung in Richtung einer weiteren Verkürzung der typischen Zeitkonstanten geht. Eine Schaltzeit von 1 ns bedeutet, daß die beiden Aufenthaltswahrscheinlichkeiten des Photons um etwa einen Meter beabstandet sein müssen, um getrennt werden zu können.

Kurzbeschreibung der Zeichnung, in der zeigen:
- Figur 1: ein Photon mit zwei Aufenthaltswahrscheinlichkeitsgebieten von orthogonaler, linearer Polarisation;
- Figur 2: eine Anordnung zur Durchführung des Verfahrens nach Anspruch 1 oder Anspruch 2;
- Figur 3: Aufenthaltswahrscheinlichkeit und Polarisation eines Photons an verschiedenen Orten der Anordnung aus Figur 2;
- Figur 4: eine Anordnung zur wahlweise Generierung von Einzelphotonen oder Photonenpaaren mit Hilfe eines polarisierenden Strahlteilers.

Figur 1 zeigt schematisch die räumliche Aufenthaltswahrscheinlichkeit und Polarisation eines Photons mit zwei Aufenthaltswahrscheinlichkeitsgebieten, das sich entlang der z-Achse ausbreitet. Im Bereich um Z1 ist es linear in y-Richtung, im Bereich um Z2 linear in x-Richtung polarisiert. Erreicht wird eine solche Wellenfunktion bzw. Aufenthaltswahrscheinlichkeit mit einem polarisierenden Interferometer, das unter 45° zur Anfangspolarisation des Photons orientiert ist, so daß beide Interferometerarme mit gleicher Wahrscheinlichkeit durchlaufen werden. Im hier dargestellten Idealfall sind die Aufenthaltswahrscheinlichkeiten um Z1 und Z2 getrennt durch einen Bereich, in dem die Aufenthaltswahrscheinlichkeit Null ist. Der Abstand Z1-Z2 ist durch die optische Weglängendifferenz in den Interferometerarmen gegeben. Die beiden Gebiete lassen sich umso einfacher getrennt beeinflussen, je größer der Abstand Z1-Z2 ist.

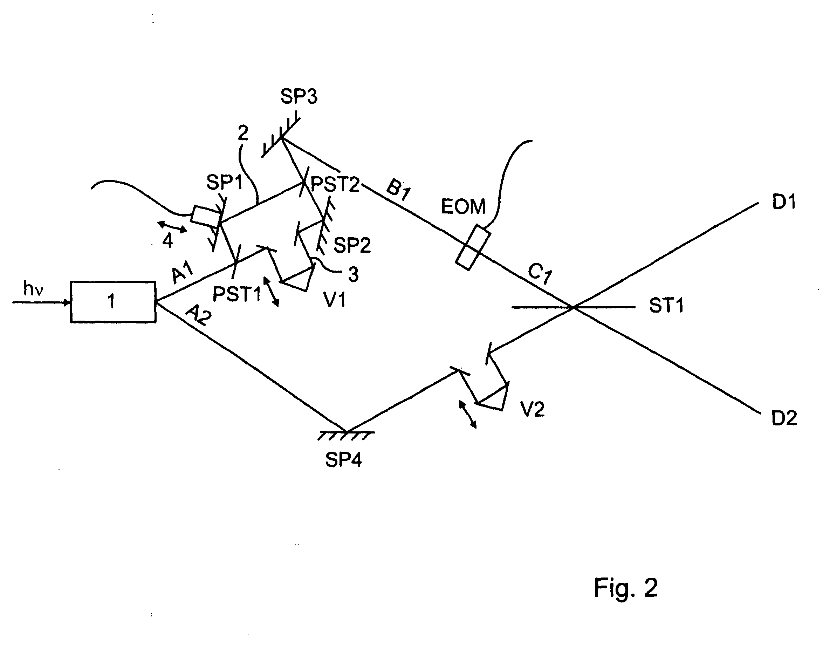

Figur 2 zeigt eine Anordnung zur Durchführung des Verfahrens zur gezielten Veränderung der Polarisation eines Photons nach Anspruch 1 oder Anspruch 2. Mit Hilfe eines hochkohärenten intensiven Lasers hv werden im nichtlinearen Kristall 1 durch parametrische Fluoreszenz Photonenpaare erzeugt, die die Teilstrahlengänge A1 und A2 durchlaufen. Das Pumpphoton zerfällt in zwei Photonen von etwa halber Energie. Je nach Typ des Zerfalls entstehen Photonen, die gleich (Typ I) oder orthogonal (Typ II) polarisiert sind.

Die Teilstrahlengänge A1 und A2 werden über zwei Spiegel SP3 und SP4 auf einen Strahlteiler ST1 gelenkt und mit diesem in zwei gemeinsame Ausgangskanäle D1 und D2 überführt.

Im ersten Teilstrahlengang A1 ist ein Interferometer angeordnet. Das Interferometer ist ein polarisierendes Mach-Zehnder-Interferometer, das unter 45° zur Polarisationsrichtung des ersten Photons angeordnet ist. Es besteht aus zwei polarisierenden Strahlteilern PST1 und PST2 und zwei Spiegeln SP1 und SP2, von denen SP1 durch eine Piezokeramik 4 elektrisch verstellbar ist. Mit dem Strahlteiler PST1 wird der Teilstrahlengang A1 in die beiden Interferometerarme 2 und 3 überführt, mit PST2 werden diese wieder zusammengeführt. Eine zusätzliche Verzögerungsstrecke im Interferometerarm 3 erlaubt verstellbar große Verzögerungen bis in den Meterbereich.

Nach dem Strahlteiler PST2 im Ausgang des Interferometers ist die Aufenthaltswahrscheinlichkeit des Photons, wie in Figur 1 dargestellt, auf zwei Gebiete Z1, Z2 aufgeteilt, die unterschiedlich polarisiert sind.

Erfindungsgemäß ist im ersten Teilstrahlengang A1 zur gezielten Veränderung der Polarisation des Photons ein elektooptischer Modulator EOM angeordnet. Dieser teilt den Teilstrahlengang ab dem Interferometer in die Bereiche B1 und C1. Der Modulator EOM dient erfindungsgemäß dazu, die Polarisation der einen Hälfte des doppelhöckrigen Photonenwellenpakets der Polarisation der anderen Hälfte anzugleichen. Der EOM wird elektrisch so angesteuert, daß er nur eines der beiden Teilwellenpakete beeinflußt. Er muß schnell genug sein, um im Zwischengebiet zwischen Z1 und Z2 (vgl. Figur 1) die Schaltung vornehmen zu können. Als Modulator kann beispielsweise eine schnell schaltbare λ/2-Verzögerungsplatte dienen, die zur Aktivierung bzw. Deaktivierung entweder schnell gedreht oder ein- und abgeschaltet wird.

Durch Anpassung der optischen Weglängen der Interferometerarme 2, 3 und des zweiten Teilstrahlengangs A2, wie in DE 198 23 849.5 beschrieben, können wahlweise Photonenpaare oder Einzelphotonen erzeugt werden. Durch erfindungsgemäße Veränderung des Polarisationszustands des ersten Photons gelingt dies mit doppelt so hoher Effizienz.

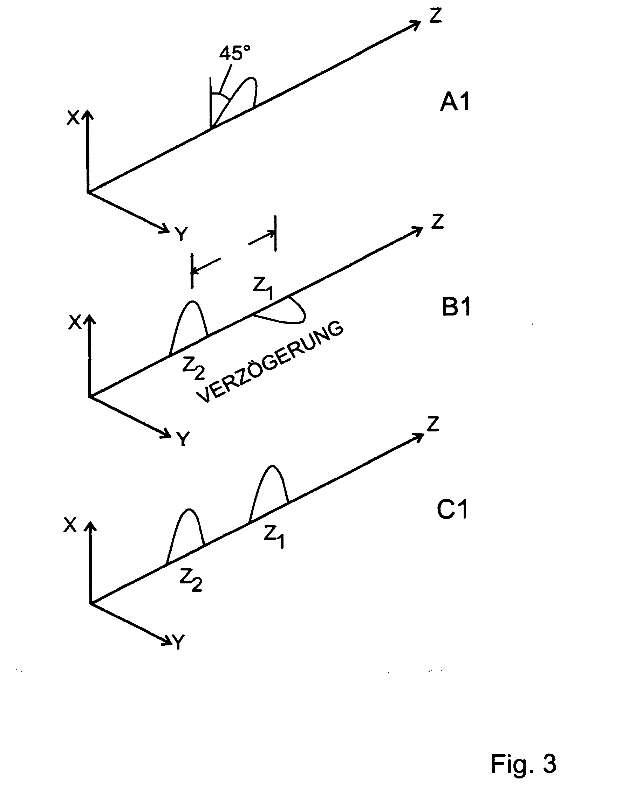

Figur 3 zeigt die Aufenthaltswahrscheinlichkeit und Polarisation eines Photons an verschiedenen Orten der Anordnung aus Figur 2. Unmittelbar bei Eintritt in den ersten Teilstrahlengang A1 ist das Photon linear unter 45° polarisiert. Nach Durchlaufen des polarisierenden Interferometers weist das Photon im Bereich B1 eine auf zwei Bereiche um Z1 und Z2 konzentrierte Aufenthaltswahrscheinlichkeit mit orthogonaler Polarisation auf, wie in Figur 2 dargestellt und bereits beschrieben. Mit dem elektrooptischen Modulator EOM wird die Polarisation des Teilwellenpakets um Z1 verändert und an die Polarisation des anderen Teilwellenpakets angepaßt, Bereich C1. Dieses so manipulierte erste Photon wird mit dem zweiten Photon des Photonenpaars durch den Strahlteiler ST1 zur Interferenz gebracht.

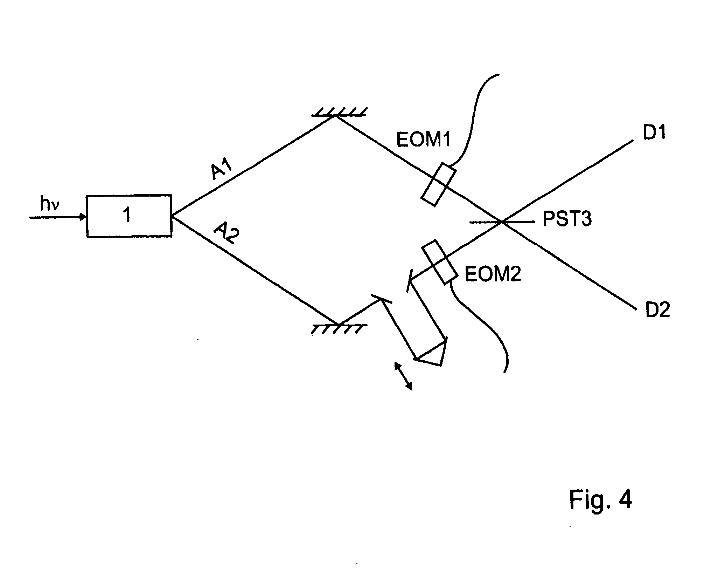

Figur 4 zeigt eine weitere Anordnung zur wahlweise Generierung von Einzelphotonen oder Photonenpaaren mit Hilfe eines polarisierenden Strahlteilers PST3 und Polarisationsmanipulation gemäß der Erfindung. Wie bei der Anordnung aus Figur 2 werden mit Hilfe eines hochkohärenten intensiven Lasers hv im nichtlinearen Kristall 1 durch parametrische Fluoreszenz Photonenpaare erzeugt, die die Teilstrahlengänge A1 und A2 durchlaufen. Die Teilstrahlengänge werden über zwei Spiegel auf einem polarisierenden Strahlteiler PST3 zusammengeführt und in zwei gemeinsame Ausgangskanäle D1 und D2 überführt. In beiden Teilstrahlengängen A1, A2 ist in der bereits berschriebenen Weise zur Umschaltung der Polarisation des jeweiligen Photons ein elektrooptischer Modulator EOM1, EOM2 angeordnet.

Treffen die Photonen des Photonenpaars mit gleicher, z.B. linearer vertikaler, Polarisation auf den Strahlteiler PST3, so werden beide reflektiert. Treffen sie mit dazu orthogonaler, z.B. linearer horizontaler, Polarisation auf den Strahlteiler PST3, werden beide transmittiert. In beiden Fällen erhält man Einzelphotonen in den Ausgängen D1 und D2. Unterschiedlich orthogonal polarisierte Photonen gelangen als Paar in einen der Ausgänge D1 oder D2.

Mit den Modulatoren EOM1, EOM2 kann gezielt die Polarisation eines der Photonen umgeschaltet werden, so daß bestimmbar ist, in welchen Ausgang es gelangt. Auf diese Weise lassen sich auch gezielt Photonenpaare erzeugen. Die Schaltzeiten der Modulatoren werden wie bereits geschildert beispielsweise aus Wiederholungsrate und den Weglängen bestimmt. Da die Wahrscheinlichkeitsverteilung der Photonen nicht aufgespalten ist, kann die Aktivierung des Modulator vor Eintreffen des Photons beginnen; der Modulator muß nicht so schnell aktivierbar bzw. deaktivierbar sein wie im Fall der Polarisationsveränderung innerhalb derselben Photon-Wellenfunktion. Es genügt, wenn der Modulator bis zum nächsten Zyklus deaktiviert und erneut aktivierbar ist.

### Gewerbliche Anwendbarkeit:

Die Erfindung läßt sich vorteilhaft auf dem Gebiet der Quantencomputer und Quantenkryptographie zur weiteren Steigerung der Effizienz einsetzen.

## Patentansprüche

1. Verfahren zur Veränderung der Polarisation wenigstens eines Photons von aus einer Photonenpaarquelle in verschiedene Teilstrahlengänge (A1,A2) abgestrahlten Photonen mittels eines elektrooptischen Modulators (EOM), welcher jeweils in dem Teilstrahlengang (A1), den das zu beeinflussende Photon durchläuft, angeordnet ist und der im aktivierten Zustand die Polarisation eines Photons zu verändern imstande ist, **dadurch gekennzeichnet,**
**daß** der Modulator (EOM) zeitlich derart aktiviert wird, daß sich die Aufenthaltswahrscheinlichkeit des Photons im Bereich des elektrooptischen Modulators (EOM) im aktivierten Zustand in einem Maximum befindet, und der Modulator (EOM) nach Durchgang des Maximums deaktiviert wird, wobei
- die Photonenpaarquelle ein mit einem gepulsten Laser gepumpter optisch nichtlinearer Kristall (1) ist und der Zeitpunkt, zu dem der Modulator (EOM) aktiviert wird (Aktivierungszeitpunkt), aus der Puls-Wiederholungsrate und der optischen Weglänge vom Kristall (1) bis zum elektrooptischen Modulator (EOM) bestimmt wird,
- und/oder der Aktivierungszeitpunkt zur Beeinflussung des einen Photons aus dem Registrierzeitpunkt des anderen Photons bestimmt wird, wobei das andere Photon registriert wird, ohne es zu vernichten.

2. Verfahren zur Erzeugung von wahlweise Einzelphotonen oder Photonenpaaren in einem optischen Kanal unter Verwendung einer Photonenpaarquelle, wobei die Photonen eines Photonenpaars in jeweils einen Teilstrahlengang (A1,A2) der Vorrichtung eingekoppelt und die beiden Teilstrahlengänge (A1,A2) auf einem Strahlteiler (ST1) zusammengeführt und in zwei gemeinsame Ausgangskanäle überführt werden, eines Interferometers, das im ersten Teirstrahlengang (A1) angeordnet ist, sowie von Mitteln (4,V1) zur Veränderung der optischen Weglängen der Interferometerarme und/oder des zweiten Teilstrahlengangs, wobei im ersten Teilstrahlengang nach dem Interferometer ein elektrooptischer Modulator (EOM) angeordnet wird, der im aktivierten Zustand die Polarisation eines Photons zu verändern imstande ist, **dadurch gekennzeichnet,**
**daß** der Modulator (EOM) zeitlich derart aktiviert wird, daß sich die Aufenthaltswahrscheinlichkeit des Photons im Bereich des elektrooptischen Modulators (EOM) im aktivierten Zustand in einem Maximum befindet, und der Modulator (EOM) nach Durchgang des Maximums deaktiviert wird, wobei
- die Photonenpaarquelle ein mit einem gepulsten Laser gepumpter optisch nichtlinearer Kristall (1) ist und der Zeitpunkt, zu dem der Modulator (EOM) aktiviert wird (Aktivierungszeitpunkt), aus der Puls-Wiederholungsrate und der optischen Weglänge vom Kristall (1) bis zum elektrooptischen Modulator (EOM) bestimmt wird,
- und/oder der Aktivierungszeitpunkt zur Beeinflussung des einen Photons aus dem Registrierzeitpunkt des anderen Photons bestimmt wird, wobei das andere Photon registriert wird, ohne es zu vernichten,
- und/oder der Aktivierungszeitpunkt des Modulators (EOM) aus der optischen Weglänge eines oder beider Interferometerarme bestimmt wird.

3. Verfahren nach Anspruch 2, **dadurch gekennzeichnet, daß** das Interferometer ein polarisierendes Interferometer ist, welches unter 45° zur Polarisationsrichtung des in den ersten Teilstrahlengang (A1) abgestrahlten Photons angeordnet ist.

4. Verfahren nach einem der Ansprüche 1 bis 3, **dadurch gekennzeichnet, daß** der Modulator (EOM) die Polarisation des Photons um 90° zu drehen imstande ist.

5. Verfahren nach einem der Ansprüche 1 bis 4, **dadurch gekennzeichnet, daß** der elektrooptische Modulator (EOM) ein λ/2-Verzögerungselement ist, welches zur Veränderung der Polarisation des Photons schnell gedreht oder ein- bzw. abgeschaltet wird.

6. Verfahren nach einem der Ansprüche 1 bis 5, **dadurch gekennzeichnet, daß** die Dauer, für die der Modulator (EOM) aktiviert wird, wenigstens um die Hälfte geringer als die Periodendauer der gepulsten Photonenpaarquelle ist.

## Claims

1. Method for changing the polarization of at least one photon of photons emitted into different optical paths (A1,A2) from a photon-pair source, this being accomplished by means of an electrooptic modulator (EOM) disposed in the optical path (A1) travelled by the photon to be influenced, wherein said electrooptic modulator (EOM), when activated, is capable of changing the polarization of a photon, **characterized in that** the timing of the activation of the modulator (EOM) is such that there is maximum probability of the photon being in the region of the electrooptic modulator (EOM) when activated, and **in that**, after the maximum has passed, the modulator (EOM) is deactivated, wherein
- the photon-pair source is an optically non-linear crystal (1) pumped with a pulsed laser and the instant at which the modulator (EOM) is activated (instant of activation) is determined from the pulse repetition rate and the optical path length from the crystal (1) to the electrooptic modulator (EOM);
- and/or the instant of activation for influencing the one photon is determined from the instant of registration of the other photon, the other photon being registered without destroying it.

2. Method for producing either single photons or photon pairs in an optical channel using a photon-pair source, the photons of a photon pair each being coupled into an optical path (A1,A2) of the device and the two optical paths (A1,A2) being united at a beam splitter (ST1) and being transferred into two common output channels; further using an interferometer disposed in the first optical path (A1); and further using means (4, V1) for changing the optical path lengths of the interferometer arms and /or of the second optical path, wherein an electrooptic modulator (EOM) is disposed in the first optical path after the interferometer, said electrooptic modulator (EOM), when activated, being capable of changing the polarization of a photon, **characterized in that** the timing of the activation of the modulator (EOM) is such that there is maximum probability of the photon being in the region of the electrooptic modulator (EOM) when activated, and **in that**, after the maximum has passed, the modulator (EOM) is deactivated, wherein
- the photon-pair source is an optically non-linear crystal (1) pumped with a pulsed laser and the instant at which the modulator (EOM) is activated (instant of activation) is determined from the pulse repetition rate and the optical path length from the crystal (1) to the electrooptic modulator (EOM);
- and/or the instant of activation for influencing the one photon is determined from the instant of registration of the other photon, the other photon being registered without destroying it;
- and/or the instant of activation of the modulator (EOM) is determined from the optical path length of one or both interferometer arms.

3. Method according to claim 2, **characterized in that**
the interferometer is a polarizing interferometer disposed at 45° to the polarization direction of the photon emitted into the first optical path (A1).

4. Method according to any one of claims 1 to 3, **characterized in that**
the modulator (EOM) is capable of rotating the polarization of the photon through 90°.

5. Method according to any one of claims 1 to 4, **characterized in that**
the electrooptic modulator (EOM) is a λ/2 retardation element, said λ/2 retardation element being quickly rotated or turned on or off in order to change the polarization of the photon.

6. Method according to any one of claims 1 to 5, **characterized in that**
the duration for which the modulator (EOM) is activated is at least less by half than the cycle duration of the pulsed photon-pair source.

## Revendications

1. Procédé destiné à modifier, au moyen d'un modulateur électro-optique (EOM), la polarisation d'au moins un photon appartenant à des photons émis depuis une source de paires de photons en différentes trajectoires de radiation partielles (A1,A2), ledit modulateur étant disposé respectivement dans la trajectoire de radiation partielle (A1) que traverse le photon à influencer, et étant en mesure, à l'état activé, de modifier la polarisation d'un photon, **caractérisé en ce que**
le modulateur (EOM) s'active périodiquement de sorte que la probabilité de séjour du photon dans la zone du modulateur électro-optique (EOM) à l'état activé se trouve à un maximum et que le modulateur (EOM) se désactive après le franchissement du maximum,
- la source de paires de photons étant un cristal optiquement non linéaire (1) pompé par un laser pulsé et l'instant auquel le modulateur (EOM) s'active (instant d'activation) étant déterminé à partir du taux de répétition des impulsions et de la longueur du trajet optique entre le cristal (1) et le modulateur électro-optique (EOM),
- et/ou l'instant d'activation destiné à influencer ce photon étant déterminé à partir de l'instant d'enregistrement de l'autre photon, cet autre photon étant enregistré sans être détruit.

2. Procédé destiné à la production au choix de photons individuels ou de paires de photons dans un canal optique en utilisant une source de paires de photons, les photons d'une paire de photons étant injectés chacun dans une trajectoire de radiation partielle (A1,A2) du dispositif et les deux trajectoires de radiation partielles (A1,A2) convergeant sur un séparateur du faisceau (ST1) et étant transférées dans deux canaux de sortie communs, un interféromètre disposé dans la première trajectoire de radiation partielle (A1), ainsi que des moyens (4,V1) servant à modifier les longueurs de trajet optique des bras de l'interféromètre et/ou de la deuxième trajectoire de radiation partielle, un modulateur électro-optique (EOM) étant placé en aval de l'interféromètre dans la première trajectoire de radiation partielle et étant en mesure, à l'état activé, de modifier la polarisation d'un photon, **caractérisé en ce que**
le modulateur (EOM) s'active périodiquement de sorte que la probabilité de séjour du photon dans la zone du modulateur électro-optique (EOM) à l'état activé se trouve à un maximum et que le modulateur (EOM) se désactive après le franchissement du maximum, la source de paires de photons étant un cristal optiquement non linéaire (1) pompé par un laser pulsé et l'instant auquel le modulateur (EOM) s'active (instant d'activation) étant défini à partir du taux de répétition des impulsions et de la longueur du trajet optique entre le cristal (1) et le modulateur électro-optique (EOM),
et/ou l'instant d'activation destiné à influencer ce photon étant déterminé à partir de l'instant d'enregistrement de l'autre photon, cet autre photon étant enregistré sans être détruit
et/ou l'instant d'activation du modulateur (EOM) étant défini à partir de la longueur de trajet optique d'un bras de l'interféromètre ou des deux bras.

3. Procédé selon la revendication 2, **caractérisé en ce que** l'interféromètre est un interféromètre polarisant disposé avec un angle de 45° par rapport à la direction de polarisation du photon émis dans la première trajectoire de radiation partielle (A1).

4. Procédé selon l'une des revendications 1 à 3, **caractérisé en ce que** le modulateur électro-optique (EOM) est en mesure de tourner la polarisation du photon de 90°.

5. Procédé selon l'une des revendications 1 à 4, **caractérisé en ce que** le modulateur électro-optique (EOM) est un élément temporisateur λ/2 qui se tourne, s'allume ou s'éteint rapidement afin de modifier la polarisation du photon.

6. Procédé selon l'une des revendications 1 à 5, **caractérisé en ce que** la durée pendant laquelle le modulateur (EOM) est activé est au moins inférieure de moitié à la durée de période de la source de paires de photons pulsée.
